(19) Europäisches Patentamt / European Patent Office / Office européen des brevets

(11) **EP 2 568 029 B1**

(12) **EUROPÄISCHE PATENTSCHRIFT**

(45) Veröffentlichungstag und Bekanntmachung des Hinweises auf die Patenterteilung:
**02.04.2014 Patentblatt 2014/14**

(51) Int Cl.:
***C09K 8/58*** *(2006.01)*

(21) Anmeldenummer: **12183084.8**

(22) Anmeldetag: **05.09.2012**

(54) **Verfahren zur Förderung von Erdöl aus unterirdischen Erdöllagerstätten**

Method for transporting crude oil from subterranean crude oil storage areas

Procédé de transport de pétrole à partir de stations de stockage de pétrole souterraines

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2011 EP 11180562**

(43) Veröffentlichungstag der Anmeldung:
**13.03.2013 Patentblatt 2013/11**

(73) Patentinhaber:
• **Wintershall Holding GmbH**
  **34119 Kassel (DE)**
• **Institute of Petroleum Chemistry of the Siberian Branch of the Russian Academy of Sciences Tomsk 634021 (RU)**

(72) Erfinder:
• **Stehle, Vladimir**
  **34123 Kassel (DE)**
• **Konrad, Siemer**
  **34128 Kassel (DE)**
• **Liubov, Altunina**
  **634021 Tomsk (RU)**
• **Kuvshinov, Vladimir**
  **634021 Tomsk (RU)**
• **Kuvshinov, Ivan**
  **634021 Tomsk (RU)**

(74) Vertreter: **Oswald, Oliver**
**BASF SE**
**GVX/B - C 6**
**Carl-Bosch-Str. 38**
**67056 Ludwigshafen (DE)**

(56) Entgegenhaltungen:
**WO-A1-2007/135617  US-A1- 2011 088 899**
**US-B2- 7 273 101**

• **DATABASE WPI Week 200880 Thomson Scientific, London, GB; AN 2008-N82170 XP002664771, & RU 2 338 768 C1 (FUEL ENERGY STOCK CO) 20. November 2008 (2008-11-20)**
• **ALTUNINAV L K ET AL: "Oil & Gas Science and Technology", OIL & GAS SCIENCE & TECHNOLOGY: REVUE DE L'INSTITUT FRANCAIS DU PETROLE, EDITIONS TECHNIP. PARIS, FR, Bd. 63, Nr. 1, 1. Januar 2008 (2008-01-01) , Seiten 37-48, XP002621431, ISSN: 1294-4475, DOI: 10.2516/OGST:2007075 [gefunden am 2007-12-14]**
• **DATABASE WPI Week 199719 Thomson Scientific, London, GB; AN 1997-211356 XP002664757, & RU 2 066 743 C1 (AS RUSSIA SIBE SECT OIL CHEM INST) 20. September 1996 (1996-09-20)**

EP 2 568 029 B1

**Beschreibung**

Die vorliegende Erfindung betrifft ein Verfahren zur Förderung von Erdöl aus Erdöllagerstätten, bei dem man zur Erhöhung der Erdölausbeute hoch permeable Bereiche der Erdölformation durch separates Injizieren von mindestens zwei verschiedenen Formulierungen in die Lagerstätte blockiert, wobei sich die Formulierungen erst in der Lagerstätte miteinander vermischen und die Mischung unter dem Einfluss der Lagerstättentemperatur hochviskose Gele bildet. Das Verfahren kann insbesondere im Finalstadium der Lagerstätteentwicklung, bei Steigerung der Produktionsverwässerung und besonders nach dem Wasserfluten der Lagerstätten eingesetzt werden.

In natürlichen Erdölvorkommen liegt Erdöl in Hohlräumen poröser Speichergesteine vor, welche zur Erdoberfläche hin von undurchlässigen Deckschichten abgeschlossen sind. Neben Erdöl, inklusive Anteilen von Erdgas, enthält eine Lagerstätte weiterhin mehr oder weniger stark salzhaltiges Wasser. Bei den Hohlräumen kann es sich um sehr feine Hohlräume, Kapillaren, Poren oder dergleichen handeln, beispielsweise solche mit einem Durchmesser von nur ca. 1 $\mu$m; die Formation kann daneben aber auch Bereiche mit Poren größeren Durchmessers und/oder natürliche Brüche aufweisen.

Nach dem Niederbringen der Bohrung in die ölführenden Schichten fließt das Öl zunächst aufgrund des natürlichen Lagerstättendruckes zu den Förderbohrungen und gelangt eruptiv an die Erdoberfläche. Diese Phase der Erdölförderung wird vom Fachmann Primärförderung genannt. Bei schlechten Lagerstättenbedingungen, wie beispielsweise einer hohen Ölviskosität, schnell abfallendem Lagerstättendruck oder großen Fließwiderständen in den ölführenden Schichten, kommt die Eruptivförderung schnell zum Erliegen. Mit der Primärförderung können im Durchschnitt nur 2 bis 10 % des ursprünglich in der Lagerstätte vorhandenen Öles gefördert werden. Bei höher viskosen Erdölen ist eine eruptive Produktion in der Regel überhaupt nicht möglich.

Um die Ausbeute zu steigern, werden daher die so genannten sekundären Förderverfahren eingesetzt.

Das gebräuchlichste Verfahren der sekundären Erdölförderung ist das Wasserfluten. Dabei wird durch so genannte Injektionsbohrungen Wasser in die ölführenden Schichten eingepresst. Hierdurch wird der Lagerstättendruck künstlich erhöht und das Öl von den Injektionsbohrungen aus zu den Förderbohrungen gedrückt. Durch Wasserfluten kann der Ausbeutungsgrad unter bestimmten Bedingungen wesentlich gesteigert werden.

Beim Wasserfluten soll im Idealfalle eine von der Injektionsbohrung ausgehende Wasserfront das Öl gleichmäßig über die gesamte Erdölformation zur Produktionsbohrung drücken. In der Praxis weist eine Erdölformation aber Bereiche mit unterschiedlich hohem Fließwiderstand auf. Neben feinporösen ölgesättigten Speichergesteinen mit einem hohen Fließwiderstand für Wasser existieren auch Bereiche mit niedrigem Fließwiderstand für Wasser, wie beispielsweise natürliche oder künstliche Brüche oder sehr permeable Bereiche im Speichergestein. Bei derartigen permeablen Bereichen kann es sich auch um bereits entölte Bereiche handeln. Beim Wasserfluten fließt das eingepresste Flutwasser naturgemäß hauptsächlich durch Fließwege mit niedrigem Fließwiderstand von der Injektionsbohrung zur Produktionsbohrung. Dies hat zur Folge, dass die feinporösen ölgesättigten Lagerstättenbereiche mit hohem Fließwiderstand nicht mehr geflutet werden, und dass über die Produktionsbohrung zunehmend mehr Wasser und weniger Erdöl gefördert wird. Der Fachmann spricht in diesem Zusammenhang von einer "Verwässerung der Produktion". Die genannten Effekte sind bei schweren bzw. viskosen Erdölen besonders ausgeprägt. Je höher die Erdölviskosität, desto wahrscheinlicher ist die schnelle Verwässerung der Produktion.

Zur Förderung von Erdöl aus Lagerstätten mit hoher Erdölviskosität kann das Erdöl auch durch Einpressen von Heißdampf in der Lagerstätte erwärmt und so die Ölviskosität verringert werden. Wie beim Wasserfluten können aber auch Heißdampf und Dampfkondensat unerwünscht schnell durch hoch permeable Zonen von den Injektionsbohrungen zu den Produktionsbohrungen durchschlagen, und damit wird die Effizienz der tertiären Förderung reduziert.

Im Stand der Technik sind Maßnahmen bekannt, derartige hoch permeable Zonen zwischen Injektionsbohrungen und Produktionsbohrungen mittels geeigneter Maßnahmen zu schließen. Hierdurch werden hoch permeable Zonen mit geringem Fließwiderstand blockiert und das Flutwasser bzw. der Flutdampf durchströmen wieder die ölgesättigten, niedrig permeablen Schichten. Derartige Maßnahmen sind auch als so genannte "Conformance Control" bekannt. Einen Überblick über Maßnahmen zur "Conformance Control" geben Borling et al. "Pushing out the oil with Conformance Control" in Oilfield Review (1994), Seiten 44 ff.

Zur "Conformance Control" können vergleichsweise niedrig viskose Formulierungen bestimmter chemischer Stoffe eingesetzt werden, die sich leicht in die Formation einpressen lassen, und deren Viskosität erst nach dem Einpressen in die Formation unter den in der Formation herrschenden Bedingungen deutlich ansteigt. Derartige Formulierungen enthalten zur Viskositätssteigerung geeignete anorganische, organische oder polymere Komponenten. Die Viskositätssteigerung der eingepressten Formulierung kann einerseits einfach zeitverzögert auftreten. Es sind aber auch Formulierungen bekannt, bei denen die Viskositätssteigerung im Wesentlichen durch den Temperaturanstieg ausgelöst wird, wenn sich die eingepresste Formulierung in der Lagerstätte allmählich auf die Lagerstättentemperatur erwärmt. Formulierungen, deren Viskosität erst unter Formationsbedingungen ansteigt, sind beispielsweise als "Thermogele" oder "delayed gelling system" bekannt. Diese Formulierungen sind jedoch nur effizient anwendbar für Lagerstätten, deren Temperatur über 60 °C liegt. Für "kalte" Lagerstätten, deren Temperatur weniger als 60 °C beträgt, werden Formulierungen eingesetzt, die vor dem Injizieren angemischt werden, dabei zunächst niedrig viskos bleiben und erst nach dem injizieren in die Lagerstätte durch chemische Reaktionen Komponenten ausbilden, die die Viskosität der Formulierung steigern.

Zu dieser Gruppe gehören Formulierungen enthaltend Urotropin, Harnstoff und Aluminiumsalze oder andere Metallsalze. Verfahren zur Erdölförderung mit dieser Gruppe Formulierungen sind beispielsweise in RU2066743, RU2250367 und RU2382174 offenbart. Nachteilig an diesen Verfahren ist zum einen, dass die chemische Reaktion zwischen Urotropin, Harnstoff und Metallsalz auch bei niedrigen Temperaturen bereits beim Vermischen obertage einsetzt und zum anderen, dass die Reaktionszeit, in der sich aus der Formulierung ein viskoses Gel bildet, vergleichsweise kurz ist. Dies führt dazu, dass sich nur in der Nahzone der Injektion eine so genannte Gelbank ausbildet, jedoch nicht in etwas entfernteren Zonen.

In der folgenden Tabelle ist beispielhaft die Abhängigkeit der Gelbildungszeit einer wässrigen Zusammensetzung enthaltend 4 Gew.-% Urotropin, 20 Gew. % Harnstoff und 17,6 Gew.-% Poyhydroxyaluminiumchlorid ($Al_nOH)_m$ $Cl_{3n-m}$, AluStar®), 58,4 Gew.-% Wasser, bezogen auf das Gesamtgewicht der Lösung, bei unterschiedlichen Temperaturen dargestellt.

Tabelle 1:

| Temperatur [°C] | Rheologisch gemessene Gelbildungszeit [h] | |
|---|---|---|
| | 50% | 90% |
| 20 | 20 | 55 |
| 30 | 5 | 17 |
| 40 | 2 | 6 |
| 50 | 1 | 2 |
| 50 % bzw. 90 % bedeuten, dass 50 % bzw. 90 % der Lösung als Gel vorliegt. | | |

Daher ist es bei Lagerstättentemperaturen, die nur etwa 20 °C betragen, nicht möglich, die Mischung auf Basis von Urotropin, Harnstoff und gelbildendem Metallsalz tief in die Lagerstätte zu verpumpen, da bereits Lösungen mit 50% Gelanteil nicht mehr ausreichend beweglich sind und es üblicherweise mehr als einen Tag dauert, bis die Mischung die Stelle in der Formation erreicht hat, an der sie wirken soll. Somit erreichen die injizierten Formulierungen gar nicht die hoch permeablen Zonen, die sie eigentlich blockieren sollen, sondern viskose Gele werden schon an der Injektionsbohrung bzw. in der Bohrlochnahzone gebildet. Die Gele können das weitere Verpumpen der gelbildenden Formulierung behindern, und außerdem kann naturgemäß ein nachfolgendes Wasser- oder Dampffluten verhindert werden.

Aufgabe der vorliegenden Erfindung war es daher, ein Verfahren zur Förderung von Erdöl aus Erdölformationen bereitzustellen, bei dem die Verwässerung der Produktion reduziert wird und der Entölungsgrad steigt, und welches auch für Lagerstäten mit relativ niedriger Temperatur geeignet ist.

Diese Aufgabe wird gelöst durch das folgende Verfahren zur Förderung von Erdöl aus unterirdischen Erdöllagerstätten, in welche mindestens eine Injektionsbohrung und mindestens eine Produktionsbohrung abgeteuft sind, umfassend mindestens die folgenden Verfahrensschritte:

(1) Injizieren von eines oder mehrerer Flutmedien in mindestens eine Injektionsbohrung und Entnahme von Erdöl durch mindestens eine Produktionsbohrung,

(2) Blockieren hoch permeabler Zonen der Erdöllagerstätte im Bereich zwischen der mindestens einen Injektionsbohrung und der mindestens einen Produktionsbohrung, indem mindestens eine wässrige Formulierungen $F_1$ und mindestens eine wässrige Formulierungen $F_2$ jeweils separat nacheinander durch die mindestens eine Injektionsbohrung in die Lagerstätte injiziert werden, wobei sich die Formulierungen nach dem Injizieren in der Formation miteinander vermischen und viskose Gele bilden,

(3) Fortsetzen des Injizierens eines oder mehrerer Flutmedien in die Injektionsbohrung,

dadurch gekennzeichnet, dass
die Formulierung $F_1$ Wasser und Urotropin umfasst,
die Formulierung $F_2$ Wasser und Harnstoff umfasst, und
$F_1$ und/oder $F_2$ mindestens eine weitere Verbindung M ausgewählt aus Metallverbindungen und Halbmetallverbindungen umfassen, die beim Versetzen mit Basen Gele bilden kann,

wobei die Temperatur an der Injektionsbohrung vor Verfahrensschritt (2) höchstens 60 °C beträgt.

In einer bevorzugten Ausführungsform wird diese Aufgabe gelöst durch das folgende Verfahren zur Förderung von Erdöl aus unteridischen Erdöllagerstätten, in welche mindestens eine Injektionsbohrung und mindestens eine Produktionsbohrung abgeteuft sind, umfassend mindestens die folgenden Verfahrensschritte:

(1) Injizieren eines oder mehrerer Flutmedien in mindestens eine Injektionsbohrung und Entnahme von Erdöl durch mindestens eine Produktionsbohrung,

(2) Blockieren hoch permeabler Zonen der Erdöllagerstätte im Bereich zwischen der mindestens einen Injektionsbohrung und der mindestens einen Produktionsbohrung, indem mindestens eine wässrige Formulierungen $F_1$ und mindestens eine wässrige Formulierungen $F_2$ jeweils separat nacheinander durch die mindestens eine Injektionsbohrung in die Lagerstätte injiziert werden, wobei sich die Formulierungen nach dem Injizieren in der Formation in einer Vermischungszone miteinander vermischen und viskose Gele bilden,

(3) Fortsetzen des Injizierens eines oder mehrerer Flutmedien in die Injektionsbohrung,

dadurch gekennzeichnet, dass

die Formulierung $F_1$ Wasser und Urotropin umfasst,

die Formulierung $F_2$ Wasser und Harnstoff umfasst, und $F_1$ und/oder $F_2$ mindestens eine weitere Verbindung M ausgewählt aus Metallverbindungen und Halbmetallverbindungen umfassen, die beim Versetzen mit Basen Gele bilden kann, wobei die Metallverbindugen und Halbmetallverbindungen aus Fe(II) und Fe(III)-Salzen, Vanadiumsalzen, Zirkoniumsalzen, Aluminium(III)salzen und kolloidalen Si-Verbindungen ausgewählt werden,

und dass nach Schritt (2) in der Vermischungszone der Formulierungen die Konzentration des Urotropins mindestens 1 Gew.-%, die Konzentration des Harnstoffs mindestens 5,75 Gew.-% und die Konzentration der mindestens einen Verbindung M mindestens 5 Gew.-% beträgt, bezogen auf die Summe aus Wasser, Urotropin, Harnstoff und der mindestens einen Verbindung M, die sich in der Vermischungszone befinden, wobei die Temperatur an der Injektionsbohrung vor Verfahrensschritt (2) höchstens 60 °C beträgt.

Das erfindungsgemäße Verfahren hat den Vorteil, dass man auch in Lagerstätten mit niedriger Temperatur hochpermeable Zonen gezielt mittels anorganischer Gele blockieren kann. Das Verfahren ermöglicht, auch abgekühlte (beispielsweise durch Wasserfluten), ausgewaschene Gesteinszonen in der Lagerstätte zu blockieren. Der Abstand zwischen dem Bohrloch und der Gelbank ist bei dem erfindungsgemäßen Verfahren unabhängig von der Temperatur regelbar. Hierdurch wird eine effiziente Blockierung hochpermeabler Zonen erreicht, die Verwässerung der Produktion verringert und der Entölungsgrad erhöht.

Verzeichnis der Abbildungen:

Figur 1  Darstellung der Ergebnisse einer Simulationsrechnung der Mischzone nach erfindungsgemäßem Injizieren von einer Portion $F_1$, einer Portion $F_2$ und einer Portion $F_1$;

Figur 2  Darstellung des Druckverlaufs des Kernflutversuchs gemäß Beispiel 1;

Figur 3  Darstellung des Druckverlaufs des Kernflutversuchs gemäß Beispiel 2.

Zu der Erfindung ist im Einzelnen das Folgende auszuführen:

Bei dem erfindungsgemäßen Verfahren zur Förderung von Erdöl handelt es sich um ein Verfahren zur sekundären oder tertiären Erdölförderung, d.h. es wird angewandt, nachdem die primäre Erdölförderung aufgrund des Eigendrucks der Lagerstätte zum Erliegen gekommen ist und man den Druck in der Lagerstätte durch Einpressen von Wasser und/oder Dampf aufrecht erhalten muss.

Lagerstätten

Bei den Lagerstätten kann es sich um Lagerstätten für alle Sorten von Öl handeln, beispielsweise um solche für leichtes oder für schweres Öl. In einer Ausführungsform der Erfindung handelt es sich bei den Lagerstätten um Schweröllagerstätten, d.h. Lagerstätten, welche Erdöl mit einem API-Grad von weniger als 22,3° API enthalten.

Zur Ausführung des Verfahrens werden in den Erdöllagerstätten mindestens eine Produktionsbohrung und mindestens eine Injektionsbohrung abgeteuft. In der Regel wird eine Lagerstätte mit mehreren Injektionsbohrungen und mit mehreren Produktionsbohrungen versehen.

Die anfängliche Lagerstättentemperatur - das heißt die Temperatur vor Schritt (2) des erfindungsgemäßen Verfahrens - liegt üblicherweise bei 8 bis 60 °C, bevorzugt bei 8 bis 50 °C, besonders bevorzugt bei 8 bis 40 °C, ganz besonders bevorzugt bei 8 bis 30 °C und insbesondere bei 8 bis 25 °C, gemessen an der Injektionsbohrung. Die Lagerstättentemperatur ändert sich durch die Anwendung des erfindungsgemäßen Verfahrens üblicherweise zumindest im Bereich zwischen den Injektionsbohrungen und den Produktionsbohrungen.

Verfahren

Erfindungsgemäß umfasst das Verfahren mindestens drei Verfahrensschritte (1), (2) und (3), welche in dieser Reihenfolge, aber nicht zwingend unmittelbar nacheinander ausgeführt werden. Das Verfahren kann selbstverständlich noch weitere Verfahrensschritte umfassen, die vor, während oder nach den Schritten (1), (2) und (3) ausgeführt werden können.

Verfahrensschritt (1)

In einem ersten Verfahrensschritt (1) werden ein oder mehrere Flutmedien wie Stickstoff, Kohlendioxid, Wasser und Wasser, das übliche, dem Fachmann bekannte Additive wie Verdicker und Tenside enthält, bevorzugt Wasser oder Wasser enthaltend Additive in die mindestens eine Injektionsbohrung injiziert und Erdöl durch mindestens eine Produktionsbohrung entnommen. Gegenstand der vorliegenden Erfindung ist auch in Verfahren, dadurch gekennzeichnet, dass das Flutmedium ausgewählt ist aus Wasser, das gegebenenfalls Additive enthält. Mit dem Begriff "Erdöl" ist in diesem Zusammenhang selbstverständlich nicht phasenreines Öl gemeint, sondern gemeint sind die üblichen, Öl und Formationswasser umfassenden Emulsionen, welche aus Erdöllagerstätten gefördert werden.

Das injizierte Wasser hat üblicherweise eine Temperatur von 5 bis 60 °C, bevorzugt von 5 bis 50 °C und besonders bevorzugt von 5 bis 40 °C.

Durch die Injektion von Wasser bildet sich im Bereich zwischen der Injektions- und der Förderbohrung eine Zone aus, in der Öl durch Wasser verdrängt wird.

Durch die Injektion von Flutmedien wie Wasser kann sich die ursprüngliche Lagerstättentemperatur ändern, das heißt sie kann erhöht oder erniedrigt werden, je nachdem, ob das injizierte Flutmedium eine höhere oder niedrigere Temperatur als die ursprüngliche Temperatur der Lagerstätte aufweist.

Durch die Injektion eines Flutmediums wie Wasser steigt der Druck in der Lagerstätte und es bilden sich im Bereich zwischen der Injektions- und der Förderbohrung Zonen aus, in deren Öl durch das Flutmedium verdrängt wird.

Durch die natürliche Inhomogenität der Permeabilität der Lagerstätte bilden sich in gewisser Zeit zwischen dem Injektor und Produzenten die "ausgewaschenen" Zonen, die hohe Permeabilität aufweisen. Diese Zonen können unterschiedlichste Geometrie und Ausmaßen haben und sind sehr schwer zu prognostizieren. Oft sind diese Zonen an die kleinen geologischen Störungen, die mit konventionellen Messmethoden und Messgeräten nicht zu entdecken sind, oder an bestimmte Gesteinsschichten anberaumt.

Wenn die Produktionsverwässerung relativ schnell nach dem Beginn des Wasserflutens steigt, ist dies ein eindeutiges Indiz zum Wasserdurchbruch.

Verfahrensschritt (2)

Verfahrensschritt (2) kann angewandt werden, sobald die Produktion zu stark verwässert wird oder ein sogenannter Wasserdurchbruch registriert wird. Bei einem Wasserdurchbruch strömt Wasser durch hochpermeable Zonen von der Injektionsbohrung bis zur Produktionsbohrung. Hoch permeable Zonen müssen aber nicht zwingend durch das Wasserfluten erzeugt werden, sondern können auch natürlicherweise in einer Formation vorhanden sein. Weiterhin ist es möglich, dass permeable Zonen bereits in einem dem erfindungsgemäßen Verfahren vorausgehenden Verfahrensschritt geschaffen wurden.

Zur Vorbereitung von Verfahrensschritt (2) kann es vorteilhaft sein, die Temperatur im Bereich der Injektionsbohrung zu messen und das Temperaturfeld der Lagerstätte im Bereich, der unter Einfluss des Flutens steht, zu bestimmen. Methoden zur Ermittlung des Temperaturfeldes einer Erdöllagerstätte sind dem Fachmann prinzipiell bekannt. Die Temperaturverteilung wird in der Regel aus Temperaturmessungen an bestimmten Stellen der Formation in Kombination mit Simulationsrechnungen ermittelt, wobei man bei den Simulationsrechnungen unter anderem in die Formation eingebrachte Wärmemengen sowie die aus der Formation abgeführten Wärmemengen berücksichtigt. Alternativ kann jeder der Bereiche auch durch seine Durchschnittstemperatur charakterisiert werden. Für den Fachmann ist klar, dass die geschilderte Analyse der Temperaturfeldes nur eine Annäherung der tatsächlichen Verhältnisse in der Formation darstellt.

Der Verfahrensschritt (2) kann unmittelbar nach Verfahrensschritt (1) durchgeführt werden.

Im Zuge von Verfahrensschritt (2) werden hoch permeabler Zonen der Erdöllagerstätte im Bereich zwischen den Injektionsbohrungen und den Produktionsbohrungen durch Injizieren von wässrigen Formulierungen durch die mindestens eine Injektionsbohrung blockiert.

Erfindungsgemäß werden hierzu mindestens zwei unterschiedliche wässrige Formulierungen $F_1$ und $F_2$ verwendet. Die Formulierung $F_1$ umfasst Wasser sowie Urotropin (Hexamethylentetramin). Die davon verschiedene Formulierung $F_2$ umfasst Wasser sowie Harnstoff. Darüber hinaus umfasst entweder $F_1$ oder $F_2$ oder sowohl $F_1$ als auch $F_2$ mindestens eine Verbindung M ausgewählt aus Metallverbindungen und Halbmetallverbindungen, die beim Versetzen mit Basen Gele bilden können.

Zur Ausführung des Verfahrens werden die mindestens zwei Formulierungen $F_1$ und $F_2$ jeweils getrennt voneinander durch eine oder mehrere Injektionsbohrungen in die Lagerstätte injiziert. Es handelt sich dabei üblicherweise um dieselben Injektionsbohrungen, welche in Verfahrensschritt (1) zur Injektion von Wasser bzw. Dampf verwendet wurden.

Das Injizieren wird dabei so vorgenommen, dass sich die beiden Formulierungen nach dem Injizieren in der Formation vermischen.

Formulierungen $F_1$ und $F_2$

Erfindungsgemäß sind die Formulierungen $F_1$ und $F_2$ hinsichtlich ihrer Komponenten so zusammengesetzt, dass sie nach dem Vermischen untertage unter dem Einfluss der Lagerstätte auch bei Temperaturen von höchstens 60 °C viskose Gele bilden, während die separaten, unvermischten Formulierungen $F_1$ und $F_2$ auch bei höheren Temperaturen (beispielsweise 50 °C) keine Gele bilden können. Die nach dem Vermischen gebildeten viskosen Gele verstopfen Hohlräume in der Erdölformation und blockieren somit Fließwege für Wasser und/oder Dampf. Bei den Gelen handelt es sich erfindungsgemäß um anorganische Gele, insbesondere um Hydroxide oder Oxidhydrate von Metallen oder Halbmetallen.

Die mindestens eine weitere Verbindung M kann bei Versetzen mit Base Gel ausbilden. Sie ist ausgewählt aus Metallverbindungen und Halbmetallverbindungen, die bei Versetzen mit Base Gele bilden können. Diese können beispielsweise aus Fe(II) und Fe(III)-Salzen, Vanadiumsalzen, Zirkoniumsalzen, Aluminium(III)-Salzen und kolloidalen Si-Verbindungen ausgewählt werden. Gemäß einer bevorzugten Ausführungsform der Erfindung ist die mindestens eine weitere Verbindung M ausgewählt aus wasserlöslichen Aluminium(III)salzen.

Die wasserlöslichen Aluminium(III)salze werden bevorzugt aus Aluminiumnitrat, Aluminiumchlorid, Aluminiumsulfat, Aluminiumacetat, Aluminiumacetylacetonat, deren teilhydrolysierten Derivate und Mischungen davon ausgewählt. Unter teilhydrolysierten Derivaten der vorstehend aufgeführten Aluminium(III)salze fällt beispielsweise Aluminiumhydroxychlorid.

Der pH-Wert derjenigen Formulierung $F_1$ und/oder $F_2$, die die mindestens eine weitere Verbindung M ausgewählt aus wasserlöslichen Aluminium(III)salzen enthält, liegt üblicherweise bei $\leq 5$, bevorzugt bei $\leq 4{,}5$ und besonders bevorzugt bei $\leq 4$.

Bei den kolloidalen Si-Verbindungen handelt es sich bevorzugt um kolloidales $SiO_2$, welches vorteilhafterweise eine durchschnittliche Partikelgröße von 4 nm bis 300 nm aufweisen sollte. Die spezifische Oberfläche des $SiO_2$ kann beispielsweise 100 bis 300 $m^2$/g betragen.

Beim Vermischen der Formulierungen finden die folgenden chemischen Reaktionen statt:

(a) $(CH_2)_6N_4 + 10\ H_2O \rightleftarrows 6\ CH_2O + 4\ NH_4OH$

(b) $CO(NH2)_2 + CH_2O \rightarrow$ Harnstoff-Formaldehyd-Harz $+ H_2O$

(c) Verbindung M (beispielsweise $Al_n(OH)_mCl_{3n-m}$) $+ NH_4OH \rightarrow$ anorganisches Gel (beispielsweise $Al(OH)_3$) $+ NH_4Cl$

Die chemische Reaktion zwischen Formaldehyd und Harnstoff (Reaktionsgleichung (b)) bewirkt die Verschiebung des Gleichgewichts der Urotropin-Hydrolyse (Reaktionsgleichung (a)) in Richtung Formaldehyd/Ammoniumhydroxid. Das heißt, dass der Hydrolysegrad des Urotropins bei Anwesenheit von Harnstoff steigt und dadurch auch die Menge des Ammoniumhydroxids. Ammoniumhydroxid reagiert mit der Verbindung M (beispielsweise Polyhydroxylchlorid Aluminium (Alustar® 1010L)) und bildet ein Gel (Aluminiumhydroxid) und wasserlösliches Salz (Ammoniumchlorid) (Reaktionsgleichung (c)). Sind nur Urotropin und Aluminiumsalz vorhanden, Harnstoff jedoch nicht, findet keine Gelbildung statt, wie in Beispiel 1 gezeigt wird. Das gleiche gilt, wenn Harnstoff und Aluminiumsalz anwesend sind, Urotropin jedoch fehlt.

Neben Wasser können die Formulierungen optional noch weitere mit Wasser mischbare organische Lösemittel umfassen. Beispiele derartiger Lösemittel umfassen Alkohole. In der Regel sollten die Formulierungen $F_1$ und $F_2$ (F)

aber mindestens 80 Gew.-% Wasser bezüglich der Summe aller Lösemittel der Formulierung umfassen, bevorzugt mindestens 90 Gew.-% und besonders bevorzugt mindestens 95 Gew.-%. Ganz besonders bevorzugt sollte nur Wasser anwesend sein.

Die Formulierungen $F_1$ und/oder $F_2$ können darüber hinaus noch weitere Komponenten umfassen, welche die Gelbildung beschleunigen oder verlangsamen können. Beispiele hierfür umfassen weitere Salze oder Naphthensäuren. Weiterhin können die Formulierungen $F_1$ und/oder $F_2$ auch verdickende Additive umfassen, beispielsweise verdickend wirkende Polymere.

Nach dem Vermischen der Formulierungen $F_1$ und $F_2$ bilden sich durch die Erhöhung des pH-Wertes hochviskose, wasserunlösliche Gele, welche Metallionen, Hydroxid-Ionen sowie ggf. noch weitere Komponenten umfassen. Im Falle der Verwendung von Aluminiumverbindungen kann sich ein Aluminiumhydroxid- bzw. Aluminiumoxidhydratgel bilden, welche selbstverständlich noch weitere Komponenten, wie beispielsweise die Anionen des bzw. der eingesetzten Aluminiumsalze umfassen können.

Bevorzugt wird in der Formulierung $F_1$ das Urotropin in einer Menge von 6 bis 32 Gew.-%, bevorzugt 15 bis 25 Gew.-% bezüglich der Summe aller Komponenten der Formulierung $F_1$ eingesetzt.

Ebenso bevorzugt wird in der Formulierung $F_2$ der Harnstoff in einer Menge von 16 bis 36 Gew.-%, bevorzugt 20 bis 30 Gew.-% bezüglich der Summe aller Komponenten der Formulierung $F_2$ eingesetzt.

Falls die mindestens eine weitere Verbindung M nur der Formulierung $F_1$ oder nur der Formulierung $F_2$ zugesetzt wird, beträgt die Konzentration der mindestens einen Verbindung M üblicherweise 4 bis 8 Gew.-%, bezogen auf das Gesamtgewicht der Formulierung $F_1$ bzw. $F_2$ und bezogen auf die wasserfreie Verbindung.

Ist die mindestens eine Verbindung M sowohl in der Formulierung $F_1$ als auch in $F_2$ enthalten, wird die Konzentration der mindestens einen Verbindung $F_1$ in den beiden Formulierungen üblicherweise so gewählt, dass die gesamte Konzentration von M, bezogen auf $F_1$ und $F_2$, bei 2 bis 4 Gew.-% liegt.

Die Konzentration des Harnstoffs und des Urotropins sollte so bemessen werden, dass sich eine ausreichende Menge Base bilden kann, um den pH-Wert so weit abzusenken, dass tatsächlich ein Gel ausfallen kann. Im Falle von Aluminium sollte die Menge an Harnstoff und Urotropin daher zumindest so bemessen werden, dass 3 mol Base pro mol Al(III) freigesetzt werden.

Über die Konzentration der Komponenten lässt sich prinzipiell auch die Zeit bis zur Gelbildung nach dem Vermischen bestimmen, wobei allerdings zu berücksichtigen ist, dass die Vermischung der Formulierungen $F_1$ und $F_2$ in der Formation nicht vollständig sein muss, und dass dementsprechend eine gewisse Ungenauigkeit bei der Einstellung von Gelbildungszeiten bestehen bleibt. Je höher die Konzentration des Harnstoffs und des Urotropins, desto größer ist - bei gegebener Konzentration der Metallverbindungdie Geschwindigkeit der Gelbildung. Diesen Zusammenhang kann der Fachmann nutzen, um die Gelbildungszeit gezielt zu verlängern oder zu verkürzen.

Durchführung von Verfahrensschritt (2)

Erfindungsgemäß werden die mindestens zwei Formulierungen $F_1$ und $F_2$ jeweils separat durch eine oder mehrere Injektionsbohrungen in die Lagerstätte injiziert, und die Formulierungen vermischen sich erst untertage. Nach dem Injizieren der Formulierungen $F_1$ und $F_2$ wird in der Regel noch mit Wasser nachgeflutet, um die Formulierungen $F_1$ und $F_2$ weiter in die Lagerstätte zu verdrängen. Im Rahmen der vorliegenden Erfindung wird als Nachfluten das Wasservolumen bezeichnet, das direkt nach dem Injizieren der Formulierungen $F_1$ und $F_2$ injiziert wird, um die Formulierungen $F_1$ und $F_2$ untertage an die gewünschten Stellen zu bringen und um ein maximales Vermischen der Formulierungen $F_1$ und $F_2$ zu erreichen. Wird das Nachfluten zu früh gestoppt, kann es sein, dass $F_1$ und $F_2$ gar nicht oder nicht ausreichend in Kontakt miteinander kommen. Wird zu lange nachgeflutet, wird die Gelbildung in der Mischzone gestört. Nach dem Nachfluten wird üblicherweise für 1-3 Tage eine Flutpause eingelegt.

Häufig injiziert man zwischen einer Injektion der Formulierungen $F_1$ und $F_2$ bzw. $F_2$ und $F_1$ eine Portion Wasser. Diese zwischen zwei Portionen der Formulierungen $F_1$ und $F_2$ injizierte Portion Wasser wird im Folgenden auch als Pufferwasser bezeichnet. Das injizierte Volumen an Wasser sollte hierbei nicht größer, bevorzugt kleiner sein, als das Volumen der nachfolgend injizierten Portion $F_1$ oder $F_2$. Das Volumen der Formulierung $F_1$ wird mit $V_{F1}$, das Volumen der Formulierung $F_2$ wird mit $V_{F2}$ abgekürzt. In der Regel ist das Volumen der Formulierung $F_1$ bzw. der jeweils injizierten Portion an $F_1$ kleiner als das Volumen der Formulierung $F_2$ bzw. der injizierten Portion an $F_2$. Das Volumen des zwischen den Formulierungen $F_1$ und $F_2$ bzw. $F_2$ und $F_1$ injizierten Pufferwassers richtet sich üblicherweise nach dem kleineren Volumen. Bevorzugt beträgt das Volumen des Pufferwassers mindestens 1 m$^3$, insbesondere 1 m$^3$ bis $V_{F1}$, wobei $V_{F1}$ das Volumen der Formulierung $F_1$ bedeutet, das gerade vorher injiziert wurde. Das Volumen einer derartigen Portion Pufferwasser kann insbesondere 40 % bis 100 % der injizierten Portion enthaltend Urotropin (Formulierung $F_1$) betragen, bevorzugt 40 bis 80 % und besonders bevorzugt 40 bis 60 %.

Gegenstand der vorliegenden Erfindung ist auch ein Verfahren, bei dem die Viskosität des Pufferwassers durch Zugabe eines oder mehrerer Additive vor dem Injizieren erhöht wird.

Weiterhin Gegenstand der vorliegenden Erfindung ist auch ein Verfahren, bei dem das gesamte Volumen des injizierten Pufferwasers kleiner als das gesamte Volumen der injizierten Formulierungen $F_1$ und $F_2$ ist.

Weiterhin Gegenstand der vorliegenden Erfindung ist ein Verfahren, bei dem zum Nachfluten Wasser eingesetzt wird, dessen Viskosität durch Zugabe eines oder mehrerer Additive erhöht wurde.

Weiterhin Gegenstand der vorliegenden Erfindung ist ein Verfahren, bei dem zum Ausgleich der Dichte der wässrigen Formulierungen $F_1$ und $F_2$, des gegebenenfalls injizierten Pufferwassers und des Wassers zum Nachfluten Glyzerin eingesetzt wird.

Gegenstand der vorliegenden Erfindung ist somit auch ein Verfahren, bei dem $V_{F1} \leq V_{F2}$ ist.

Weiterhin Gegenstand der vorliegenden Erfindung ist somit auch ein Verfahren, bei dem das Volumenverhätlnis $V_{F2} : V_{F1}$ im Bereich von 10 000 : 1 bis 1 : 1, bevorzugt im Bereich von 1000 : 1 bis 1 : 1, besonders bevorzugt ein Bereich von 100 : 1 bis 1 : 1 und insbesondere im Bereich von 10 : 1 liegt.

Das injizierte Gesamtvolumen der Formulierungen $F_1$ und $F_2$ ($V_{F1} + V_{F2}$) ist von den geologischen Eigenschaften der Erdöllagerstätte abhängig und kann in weiten Bereichen variieren.

Das Gesamtvolumen ($V_{F1} + V_{F2}$) liegt im Allgemeinen im Bereich von 500 bis 5 $m^3$, bevorzugt im Bereich von 200 bis 10 $m^3$ und insbesondere im Bereich von 100 bis 20 $m^3$.

Dabei sollten sich die Formulierungen erst nach dem Durchfließen der Nahzone um die Injektionsbohrung herum miteinander vermischen, damit sie die hoch permeablen Zonen in der Erdölformation tatsächlich erreichen und nicht verfrüht Gele bilden.

Mit Einsatz dem Fachmann bekannten analytischer Modelle und Simulationsmodelle wird der gewünschte Abstand der Mischzone vom Injektor bestimmt. Dieser Abstand ist in gewisser Bandbreite durch das Variieren der Volumina der Portionen an Formulierung $F_1$ und $F_2$ sowie ggf. Injizieren unterschiedlicher Volumina Pufferwasser regelbar.

Beim Injizieren der Portionen von Formulierungen $F_1$ und $F_2$, gegebenenfalls von Pufferwasser und beim Nachfluten mit Wasser verringert sich die Konzentration an Urotropin, Harnstoff und Verbindung(en) M der Formulierungen zunehmend durch Beimischen von Formationswasser und Flutwasser. Der Grad der Konzentrationsminderung kann auf Basis von Laboruntersuchungen und mathematischen Modellen prognostiziert werden. Damit wird die Konzentration der chemischen Komponenten vor dem Injizieren der Formulierungen $F_1$ und $F_2$ so eingestellt, dass in der Lagerstättenzone, in der sich die Formulierungen vermischen, die Konzentration des Urotropins mindestens 1 Gew.-% beträgt, die Konzentration der Verbindung(en) M mindestens 5 Gew.-% beträgt und die Konzentration des Harnstoffs mindestens 5,75 Gew.-% beträgt, bezogen auf die Gesamtmenge der in der Vermischungszone vorhandenen Lösungen und des Wassers.

Erfindungsgemäß bevorzugt wird vor dem Injizieren der Formulierungen $F_1$ und $F_2$ die räumliche Lage der Vermischungszone der Formulierungsportionen in der Lagerstätte bestimmt und auf dieser Basis das Volumen für das Nachfluten bestimmt. In den meisten Fällen ist die Berechnung der optimalen Volumina von $F_1$ und $F_2$ und die Bestimmung der räumlichen Lage der Mischzone der Formulierungsportionen nur annähernd möglich. Deswegen wird bei seriellem Verpumpen der Portionen das Nachfluten (injiziertes Wasser bis zur Flutpause) mit kleinen Raten (Volumen Flutmedium pro Zeit) durchgeführt und nach Auftreten erster Indizien für eine Steigerung des Flutdruckes wird die Flutpause eingelegt. Als "Vermischungszone der Formulierungsportionen" wird die Lagerstättenzone bezeichnet, in der sich die Formulierungen vermischen. Unter der räumlichen Lage der Vermischungszone wird die Ausdehnung der Lagerstättenzone, in der sich die Formulierungen vermischen, und der Abstand dieser Zone von der Injektionsbohrung, durch die nachgeflutet wird, verstanden. Das Vermischen der Formulierungen $F_1$ und $F_2$ wird sich üblicherweise nicht weit von dem Injektor (max. 10-15 Meter) abspielen, da die Verdünnung der $F_1$ und $F_2$ logarithmisch vom Abstand von Injektor abhängt. Ein wichtiger Vorteil des Verfahrens ist, dass es auch bei niedrigen Injektionsraten praktisch ausgeschlossen ist, dass die Vergelung direkt in dem Injektor beginnt. Bekannte Verfahren, nach denen Urotropinlösungen, die sehr schnell vergelen, eingesetzt werden, weisen diesen Vorteil nicht auf.

Die Formulierungen $F_1$ und $F_2$ können in unterschiedlichen Abfolgen injiziert werden. Es kann zunächst eine Formulierung $F_1$ und dann eine Formulierung $F_2$ injiziert werden. Man kann auch mindestens zwei Portionen der Formulierung $F_1$ sowie mindestens zwei Portionen der Formulierung $F_2$ abwechselnd in die Lagerstätte injizieren. Es ist auch möglich, zunächst eine Portion Formulierung $F_1$, dann eine Portion der Formulierung $F_2$ und anschließend eine weitere Portion der Formulierung $F_1$ zu injizieren.

Um eine möglichst vollständige Vermischung der Formulierungen $F_1$ und $F_2$ zu erreichen, haben sich die nachfolgenden Maßnahmen bewährt.

Üblicherweise liegt das Volumen der injizierten Pufferlösung bei mindestens 1 $m^3$ und höchstens 50 $m^3$, sollte jedoch das Volumen $V_F$ nicht übersteigen, wobei $V_F$ das Volumen der Formulierung $F_1$ bzw. $F_2$ bedeutet, die gerade vorher injiziert wurde.

Bevorzugt ist das gesamte Volumen des injizierten Pufferwassers kleiner als das gesamte Volumen der injizierten Formulierungen $F_1$ und $F_2$.

Erfindungsgemäß bevorzugt wird die Pufferwasserviskosität vor dem Verpressen in die Lagerstätte durch Zugabe von Additiven erhöht. Als Additive kann man verschiedene organische und anorganische Verbindungen einsetzen, z. B. wasserlösliches PAM (Polyacrylamid), Biopolymere wie Xantan u. a.

Diese Additive kann man auch für eine Verdickung der Formulierungen $F_1$ und $F_2$ verwenden. Durch die Viskositätserhöhung wird die schnelle Vermischung der Formulierungen $F_1$ und $F_2$ vermieden.

In einer bevorzugten Ausführungsform injiziert man zunächst eine Portion Formulierung $F_1$ und dann eine Portion Formulierung $F_2$. Zwischen diesen Portionen wird Pufferwasser in die Lagerstätte injiziert. Das Volumen des Pufferwassers kann zwischen 1 m$^3$ und 50 m$^3$ schwanken, aber es soll das Volumen einer Portion des Urotropin-Wasserlösung ($F_1$) nicht übersteigen. Danach wird mit Wasser nachgeflutet, wobei das Volumen des zum Nachfluten eingesetzten Wassers Vn beträgt. Nach dem Injizieren von Vn erreichen die beide Portionen der Formulierungen $F_1$ und $F_2$ die Zone, in der sie sich maximal vermischen.

Um die Gelbildung durch Scherspannungen nicht zu stören, wird das Wassernachfluten für 1-3 Tage eingestellt und danach wieder aufgenommen. Diese Maßnahme ist erfindungsgemäß bei allen Ausführungsformen geeignet, um die Gelbildung zu unterstützen.

In einer weiteren bevorzugten Ausführungsform injiziert man drei Portionen Formulierungen ausgewählt aus $F_1$ und $F_2$ in die Lagerstätte, wobei die erste und die letzte Portion aus $F_1$ ausgewählt ist und dazwischen eine Portion Formulierung $F_2$ injiziert wird. Zwischen den einzelnen Portionen kann Pufferwasser in die Lagerstätte injiziert werden.

In einer weiteren bevorzugten Ausführungsform werden abwechselnd mehr als drei Portionen von Formulierungen ausgewählt aus $F_1$ und $F_2$ in die Lagerstätte injiziert, wobei die erste und die letzte Portion Formulierung aus $F_1$ ausgewählt ist. Zwischen den einzelnen Portionen kann Pufferwasser in die Lagerstätte injiziert werden.

Generell ist es vorteilhaft, nach Injizieren der Formulierungen $F_1$, $F_2$ und des Nachflutwassers ein bis drei Tage lang kein Flutmedium in die mindestens eine Injektionsbohrung zu injizieren, um die Gelbildung in der Lagerstätte nicht zu stören. Dabei ist besonders bevorzugt, beim Nachfluten den Druck beim Injizieren des zum Nachfluten verwendeten Wassers kontinuierlich zu messen und nach Druckanstieg um etwa 2 bis 5% einen bis drei Tage kein Flutmedium in die mindestens eine Injektionsbohrung zu injizieren. Der Druckanstieg zeigt die beginnende Gelbildung, die dann ungestört ablaufen kann.

In einer weiteren bevorzugten Ausführungsform injiziert man zunächst eine Formulierung $F_1$ und danach mindestens eine Formulierung $F_2$. Die Formulierung $F_1$ umfasst bei dieser Ausführungsform ein viskositätssteigendes Additiv, beispielsweise ein wasserlösliches, verdickend wirkendes Polymer und zwar in einer solchen Menge, dass die Viskosität der Formulierung $F_1$ unter Lagerstättenbedingungen etwas größer ist als die der danach injizierten Formulierung $F_2$. Beispiele derartiger Polymere umfassen Polyacrylamid, Mikrogele auf Basis von Polyacrylamid oder Biopolymere. Durch die leicht höhere Viskosität ist die Fließgeschwindigkeit der ersten injizierten Portion der Formulierung $F_1$ in der Formation etwas geringer als die der nachfolgend injizierten Formulierung $F_2$. Die Formulierung $F_2$ kann dementsprechend besonders gut in die fließende Front der Formulierung $F_1$ eindringen und sich mit dieser vermischen. Im Regelfalle sollte die Viskosität der injizierten Formulierung $F_1$ um nicht mehr als 30 %, beispielsweise 10 % bis 30 % höher sein als die Viskosität der später injizierten Formulierung $F_2$.

In einer weiteren bevorzugten Ausführungsform werden die Portionen von wässrigen Formulierungen $F_1$ und $F_2$, Pufferwasser und Nachflutwasser (Wasser zum Verdrängen der Formulierungen $F_1$ und $F_2$) mit gleicher Dichte aufbereitet. Dies verhindert, dass Flutportionen, die unterschiedliche Dichte aufweisen, beim Verpumpen in die produktive geologische Schicht unterschiedliche Wege nehmen und nicht in richtigen Kontakt zueinander kommen. Wenn z.B. die Urotropinlösung (10 Gew.-%) unter Verwendung von süßem Wasser bereitet wird, liegt die Lösungsdichte bei 1,03 g/cm$^3$, wobei die Dichte der Harnstofflösung mit Aluminiumsalz 1,10 g/cm$^3$ beträgt. Wenn das Pufferwasser z.B. eine höhere Dichte (Formationswasserdichte bis zu 1,2-1,3 g/cm$^3$) als die Formulierungen $F_1$ und $F_2$ hat, ist eine zeitliche Trennung der Portionen von Formulierungen $F_1$ und $F_2$ in der produktiven geologischen Schicht schlechter möglich. Dies gilt auch für das Nachflutwasser. Die Dichte der Flutportionen wird durch Zugabe von Salzen, bevorzugt ausgewählt aus NaCl und CaCl$_2$, salzhaltigem Formationswasser (Begleitwasser) oder von Glyzerin ausgeglichen. Dabei kann Rohglyzerin eingesetzt werden, das ein Nebenprodukt bei der Biodieselproduktion und leicht lösbar im Wasser ist. Salzhaltiges Formationswasser kann auch zur Herstellung der Formulierungen $F_1$ und $F_2$ eingesetzt werden.

Bei der Produktion von Biodiesel aus Rapsöl fällt als Nebenprodukt Glyzerin an (Rohglyzerin). So ergeben 10 l Öl und 1 l Methanol unter Zusatz von Reagenzien etwa 10 l Biodiesel und 1 l Glyzerin. Glyzerin ($C_3H_5(OH)_3$) ist ein dreiwertiger Alkohol. Die leicht viskose, wasserlösliche, geruchlose Flüssigkeit enthält ca. 85 bis 90 % Trockenmasse. Abhängig vom Wasseranteil und Temperatur liegt die Dichte von Rohglycerin bei 1,1 bis 1,3 g/cm$^3$.

Daten und Eigenschaften von Rohglycerin:

- Glyceringehalt 80 - 82 %
- Wassergehalt 10 - 15 %
- NaCl 5 - 7%
- Methanol 0,01 - 0,5 %
- Dichte 1,23 - 1,27 g/cm$^3$ bei 20 °C
- Ökologische Information - biologisch abbaubar.

Rohglycerin ist mit Urotropinlösung und mit Harnstofflösung mischbar.

Wie oben erwähnt, kann die Dichte der Formulierungen $F_1$ und $F_2$, des Pufferwassers und des Nachflutwassers auch durch Zugabe von Salz modifiziert werden. Zum Beispiel beträgt für eine wässrige Lösung mit 24 Gew.-% NaCl die Dichte der Lösung 1,184 g/l und für eine wässrige Lösung von 20 Gew.-% $CaCl_2$ ist die Dichte der Lösung 1,179 g/l.

Üblicherweise wird nach Injizieren der letzten Portion Formulierung, die aus $F_1$ oder $F_2$ ausgewählt sein kann, mit Wasser nachgeflutet, bevor Schritt (3) durchgeführt wird. Dabei kann Wasser eingesetzt werden, dessen Viskosität durch Zugabe eines oder mehrerer Additive erhöht wurde. Als Additive eignen sich die bereits vorstehend für die Formulierungen $F_1$, $F_2$ und das Pufferwasser für diesen Zweck genannten Verbindungen.

Verfahrensschritt (3)

Im Anschluss an Verfahrensschritt (2) wird die Ölförderung in Verfahrensschritt (3) durch mindestens eine Produktionsbohrung fortgesetzt. Dies kann sofort im Anschluss erfolgen, oder auch optional nach einer kurzen Pause, beispielsweise einer Pause von 1 bis 3 Tagen.

Bevorzugt kann die Ölförderung nach üblichen Methoden durch Einpressen eines oder mehrerer Flutmedien durch mindestens eine Injektionsbohrung in die Erdöllagerstätte und Entnehmen von Rohöl durch mindestens eine Produktionsbohrung erfolgen. Das Flutmedium kann insbesondere aus den für Schritt (1) als geeignet aufgeführten Flutmedien ausgewählt werden. Bevorzugt wird Wasser und/oder Additive enthaltendes Wasser als Flutmedium eingesetzt. Bei der mindestens einen Injektionsbohrung kann es sich um die bereits zum Injizieren der Formulierungen $F_1$ und $F_2$ verwendeten Injektionsbohrungen handeln oder auch um geeignet angeordnete andere Injektionsbohrungen.

Die Ölförderung kann aber selbstverständlich auch mittels anderer, dem Fachmann bekannter Methoden fortgesetzt werden. Beispielsweise kann man als Flutmedium auch viskose Lösungen von silikathaltigen Produkten oder verdickenden Polymeren einsetzten. Hierbei kann es sich um synthetische Polymere, wie beispielsweise Polyacrylamid oder Acrylamid umfassende Copolymere handeln. Weiterhin kann es sich auch um Biopolymere handeln, wie beispielsweise bestimmte Polysaccharide.

Es ist selbstverständlich möglich, im Anschluss an Verfahrensschritt (3) nochmals die Verfahrensschritte (2) und (3) durchzuführen. Dies kann in regelmäßigen Abständen erfolgen, beispielsweise einmal pro Jahr oder sobald ein Wasserdurchbruch registriert wird. Insbesondere wird Schritt (2) wiederholt, wenn bei der Erdölförderung in Schritt (3) die kritische Produktionsverwässerung erreicht wird. Diese ist üblicherweise erreicht, wenn die Produktionsverwässerung über 70-90% liegt.

Erfindungsgemäß wird unter "kritische Produktionsverwässerung" ein Wassergehalt des aus der mindestens einen Produktionsbohrung entnommenen Erdöls von mehr als 70 Gew.-%, bevorzugt mehr als 90 Gew.-%, verstanden, jeweils bezogen auf das Gesamtgewicht des aus der mindestens einen Produktionsbohrung entnommenen Erdöls.

Wie vorstehend bereits ausgeführt, wird unter dem Begriff "Erdöl" nicht phasenreines Öl verstanden, sondern üblicherweise eine Emulsion aus Öl und Formationswasser. Die kritische Produktionsverwässerung ist eingetreten, wenn das geförderte Erdöl mehr als 70 Gew.-%, bevorzugt mehr als 90 Gew.-% Formationswasser, jeweils bezogen auf das Gesamtgewicht der aus der Produktionsbohrung entnommenen Emulsion enthält.

Vorteile

Das erfindungsgemäße Verfahren zum Ölgewinnen hat folgende Vorteile im Vergleich zu bekannten Technologien:

- Es ist möglich, auch in einer Lagerstätte mit einer Temperatur von höchstens 60 °C die Permeabilität der hochpermeablen Zonen zu reduzieren.

- Es ist möglich, operativ die hochpermeablen Kanäle in der Lagerstätte bei Wasserdurchbruch zu blockieren, und dies auch in einem relativ großen Abstand von der Injektionsbohrung.

- Das erfindungsgemäße Verfahren verhindert die Gelbildung in der Injektionsbohrung und steigert damit die Sicherheit der Ölförderung.

- Das erfindungsgemäße Verfahren ist kostengünstig, braucht für die Realisierung keine neuen chemischen Produkte, basiert auf der Verwendung von konventionellen technischen Mittel und erlaubt eine effiziente Profilmodifikation auch in kalten oder abgekühlten Trägern/Lagerstätten.

Die Erfindung wird nachfolgend anhand der folgenden Ausführungsbeispiele näher erläutert:

Beispiel 1

Für ein Beispiel wurden die rheologischen Eigenschafen der Formulierungen $F_1$, $F_2$ und der Mischung der Formulierungen $F_1$ und $F_2$ bestimmt. Die Proben wurden in einem Wärmeschrank bei 20 °C und bei 50 °C temperiert. Die Konzentrationsangaben beziehen sich jeweils auf die gesamte Formulierung/Mischung. Das $AlCl_3$ wurde in Form einer Lösung von Polyaluminiumchlorid in Wasser eingesetzt, das unter dem Produktnamen Alustar® 1010 der Firma Applied Chemicals erhältlich ist. Die Ergebnisse sind in Tabelle 2 dargestellt.

## Tabelle 2:

| | Kompo-nenten | Gew.-% | Viskosität $\eta$ vor Tempe-rieren [mPa.s] | Temperatur | | | |
|---|---|---|---|---|---|---|---|
| | | | | 20°C | | 50°C | |
| | | | | Gelbildungs-zeit $t_{Gel}$ [Tage] | $\eta$ [mPa.s] | $t_{Gel}$ [Tage] | $\eta$ [mPa.s] |
| F1 | Urotropin Wasser | 16.0 84.0 | 1,3 | 100 | Keine Gelbildung | 27 | Keine Gelbildung |
| F2 | Harnstoff $AlCl_3$ Wasser | 32.0 8.0 60.0 | 2,5 | 100 | Keine Gelbildung | 27 | Keine Gel-bildung |
| Mischg. F1 + F2 im Verhältnis 1:1 | Harnstoff $AlCl_3$ Urotropin Wasser | 16.0 4.0 8.0 72.0 | 2,0 | 3 | 6960 | 1 | 4980 |

Beispiel 2: Anwendung des Verfahrens im Ölfeld

Es handelt sich um eine typische Lagerstätte mit Erdöl, das eine Viskosität von 150-180 cP aufweist. Ein Abschnitt der Lagerstätte ist mit einer Injektionsbohrung und mehreren Produktionsbohrungen versehen und wird bereits mehrere Jahre mit Wasser geflutet. Bei einigen Produktionsbohrungen, die mit der Injektionsbohrung kommunizieren, wird eine Produktionsverwässerung registriert. Die Lagerstätte ist durch geologische Störungen zerklüftet und weist inhomogene Permeabilität auf.

Verpumpungsschema

Um die Profilmodifikation durchzuführen und die hochpermeablen Zonen in der ölführenden Schicht zu blockieren, wird über Tage in einem Behälter eine erste Portion der Formulierung $F_1$ (30 Gew.-% Urotropin in Wasser) angesetzt. Es kann Süßwasser, Salzwasser oder Formationswasser verwendet werden. Unter Verwendung üblicher Ausrüstungen werden 20 m³ der Formulierung F₁ in die Lagerstätte durch die Injektionsbohrung injiziert und verpresst. Die erste Portion der Formulierung F₁ hat eine niedrige Viskosität und fließt vorwiegend durch die hoch permeablen Bereiche der Lagerstätte.

Anschließend werden 10 m³ Wasser in die Lagerstätte verpresst. Durch das Verpressen der 10 m³ Wasser wird die erste Portion der Formulierung F₁ mobilisiert und von der Injektionsbohrung in die Erdöllagerstätte gedrückt.

Nach dem Wasser werden 260 m³ einer Formulierung F₂ (20 Gew.-% Aluminium(III)chlorid (ALUSTAR®) und 23 Gew.-% Harnstoff in Wasser) durch die Injektionsbohrung injiziert. Anschließend werden ca. 10 m³ Wasser injiziert und unmittelbar danach abermals 20 m³ der oben genannten Formulierung F₁ injiziert. Damit werden insgesamt 260 m³ von F₂ und 40 m³ von F₁ verpumpt.

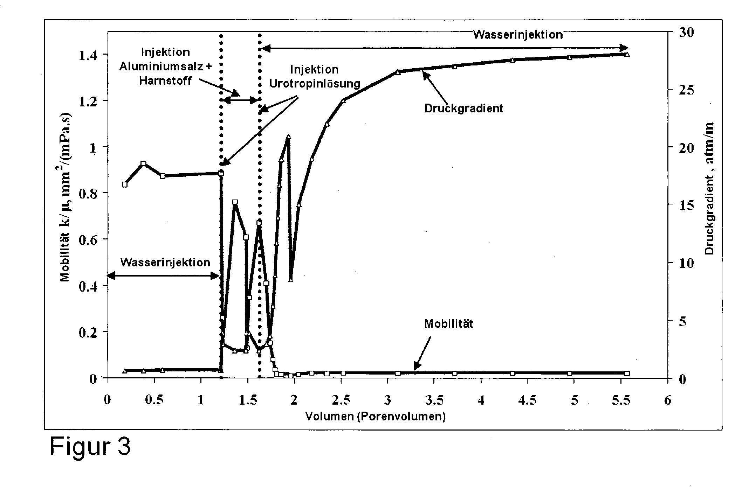

Die Abfolge der einzelnen Injektionen ist in Figur 1 schematisch dargestellt.

Durch diese Maßnahmen bildet sich beim Vermischen der Formulierungen F₁ und F₂ mindestens eine so genannte "Bank" aus den Formulierungen F₁ und F₂ und verdrängendem Wasser in der ölführenden Schicht. In den vermischten Formulierungen F₁ und F₂ finden die vorstehend gezeigten chemischen Reaktionen statt, die zur Gelbildung führen. Beim Verdrängen der Formulierungsbänke findet einerseits eine Retention (Adsorption) von Urotropin, Harnstoff und Aluminiumsalz am Gestein und anderseits eine Verdünnung statt, was zu einer Konzentrationsreduktion der gelbildenden Stoffe in den Formulierungsbänken führt.

Berechnung/Simulation der Gelbildung

Die Simulation wurde anhand des vorstehend dargestellten Verpumpungsschemas durchgeführt.

Die Formeln und Eingabedaten

Die dynamische Konzentration der wässrigen Lösung in einer Portion F₁ bzw. F₂ kann durch folgende Formel beschrieben werden:

$$K(L) = A_1 \times L \times e^{(-A2 \times L)} \qquad (1)$$

L: Abstand zwischen der Front der Lösung (eine Portion) und dem Injektor;
A₁ und A₂: Variable, die die Art der Funktion definieren.

Bei der analytischen Berechnung wurden folgende Eingabeparameter benutzt:

- Flutrate: 1000 m³/Tag;
- Porosität der Lagerstätteschicht: 30%
- Zulässiges max. Verdünnen der Formulierung F₂ in der produktiven Schicht: 25% (vier Mal dünner als die ursprüngliche Konzentration);
- Minimale Konzentration nach zulässigem max. Verdünnen der Urotropin-Lösung F₁ = 3,3% (ursprüngliche Konzentration 30 %);
- Effektive Mächtigkeit der produktiven Schicht: 15 m;
- Volumen der ersten Portion (F₁, Urotropin): 20 m³;
- Volumen der zweiten Portion (F₂, Harnstoff und AlCl₃): 260 m³;
- Volumen der dritten Portion (F₁, Urotropin): 20 m³;
- Volumen der Pufferwasserportionen (jeweils zwischen den Portionen F₁, F₂ und wieder F₁ injiziert): 10 m³;
- Linearer Koeffizient, der die Ausweitung der Zone, die mit wässriger Lösung (Portion X von F₁, F₂) gefüllt ist, definiert: kdiff = 0,1

Die Ausweitung der Zone, die mit wässriger Lösung (Portion X) gefüllt ist, kann im einfachsten Fall durch folgende Formel definiert werden:

$$W = kdiff \times L = 0,1 \times L$$

Berechnungen und Grafiken

Nach den Berechnungen beträgt die optimale Zeit des Nachflutens mit Wasser vorliegend 2 Tage, was einem

Wasservolumen von 2000 m$^3$ bei Injektionsraten von 1000 m$^3$/Tag entspricht. Bei homogener Permeabilität der gefluteten Lagerstättenschicht (Idealfall) wird eine ringartige, 1 m breite Gel-Bank mit einem Abstand von der Injektionsbohrung von 11 bis 12 m gebildet. Der Anteil der mit Urotropin ($F_1$) vermischten Harnstoff-AlCl$_3$-Lösung beträgt 89 % des gesamten injizierten Volumens von $F_2$.

Die Abhängigkeit des Vermischungsgrades der Portionen $F_1$ und $F_2$ von der Zeit des Nachflutens wird durch den Anteil der mit $F_1$ (Urotropin-Lösung) vermischten Formulierung $F_2$ am gesamten injizierten Volumen $F_2$ definiert. Grenzparameter ist der Verdünnungsgrad der Harnstoff-AlCl$_3$-Lösung in der Mischzone. Die obere Grenze ist die vierfache Verdünnung der Harnstoff-AlCl$_3$-Lösung. Laut Berechnungen wird der maximale Vermischungsgrad der drei Portionen wässriger Formulierungen 2 Tage nach Beginn des Nachflutens mit Wasser erreicht. Auch während des Nachflutens mit Wasser übersteigt die Konzentration an Harnstoff und AlCl$_3$ in der optimalen Mischzone noch immer die Mindestkonzentration für die Gelbildung, daher ist die Gelbildung in der ölführenden Schicht garantiert.

Die durch die radiale Expansion der wässrigen Formulierungen verursachte Reduktion der Ringbreite wird teilweise durch die Vergrößerung des Volumens der Formulierungen aufgrund der Verdünnung kompensiert.

Mittels der Volumina der injizierten Portionen der Formulierungen $F_1$ und $F_2$ sowie des Wassermenge beim Nachfluten kann der Abstand zwischen der Injektionsbohrung und der Gelbank geregelt werden.

Mit Beginn der Vergelung steigt auch der Injektionsdruck. Nach Beginn der Injektionsdrucksteigerung wird das Wasserfluten für ein bis drei Tage eingestellt. Danach wird das Wasserfluten wieder aufgenommen. Nach dem Blockieren hoch permeabler Bereiche bilden sich unter dem Einfluss des Flutmediums neue Flutwege in weiteren Bereichen der ölführenden Schicht, und somit wird weiteres Erdöl aus der Formation gefördert.

Beispiel 3:

Laboruntersuchungen - Kernflutversuch

Das erfindungsgemäße Verfahren wurde mittels eines Modellversuchs getestet. Hierzu wurde loses Lagerstättenmaterial der ölführenden Schicht einer Erdöllagerstätte in Nordwestdeutschland in einem Rohr verpresst.

Im ersten Modellversuch betrug die Permeabilität des Materials 0,443 Darcy ( 0,443*10$^{-12}$ m$^2$). Das gefüllte Rohr wurde an den Enden mit Vorrichtungen zum Injizieren und Entnehmen von Flüssigkeiten versehen und mittels einer Heizung auf 40°C geheizt. Als erster Schritt wurde Süßwasser in das Rohr injiziert und am anderen Ende entnommen, und zwar in einer Menge vom 4-fachen des Porenvolumens. Danach wurde eine Formulierung $F_1$ injiziert (Lösung von 30 Gew. % Urotropin in Wasser, injizierte Menge entspricht dem 0,017-fachen des Porenvolumens), danach eine Portion Wasser (0,017-faches Porenvolumen), danach eine Formulierung $F_2$ (Gemisch aus 20 Gew.-% einer wässrige Lösung von Polyaluminiumchlorid (Al$_n$(OH)$_m$Cl$_{3n-m}$, Al-Gehalt 9,15 Gew.- %, pH < 1, ALUSTAR® 1010 L (Fa. Applied Chemicals)) und 23 Gew.-% wässriger Lösung von Harnstoff, Rest : Wasser, injizierte Menge entspricht dem 0,243-fachen des Porenvolumens), danach nochmals eine Portion Wasser (0,017-faches Porenvolumen) und nochmals eine Portion der Formulierung $F_1$ (0,017-faches Porenvolumen). Nach 18 Stunden Ruhepause bei konstanter Temperatur von 40°C wurde das Wasserfluten fortgesetzt.

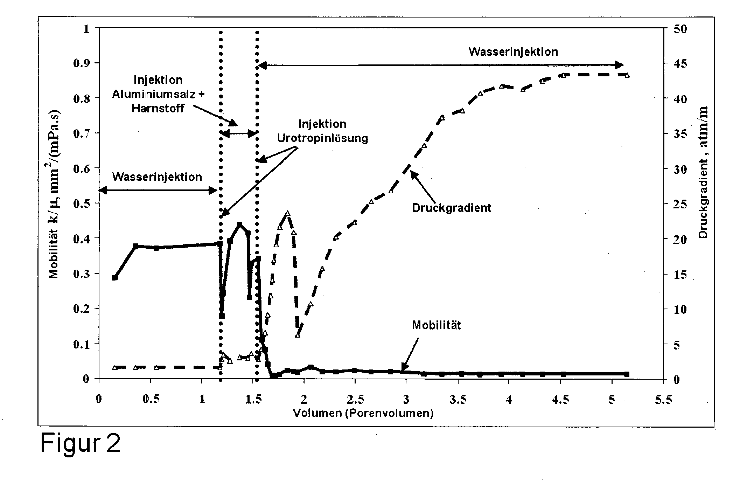

Die Ergebnisse des Versuchs sind in Figur 2 dargestellt. Figur 2 zeigt das injizierte Volumen, bezogen auf das Porenvolumen der Probe (Lagerstättenmaterial), und in Abhängigkeit davon die Mobilität sowie den Druckgradienten. Während des Wasserflutens zu Beginn ist der Druckgradient zunächst gering. Er steigt jedoch stark von 0,07 bar/m (0,07*10$^5$Pa/m) auf 20 bis 43* bar/m (20 bis 43 *10$^5$Pa/m), nachdem die Formulierungen $F_1$ und $F_2$ jeweils vollständig injiziert sind. Damit sind die Ziele des "Conformance Control" erreicht.

Beispiel 4:

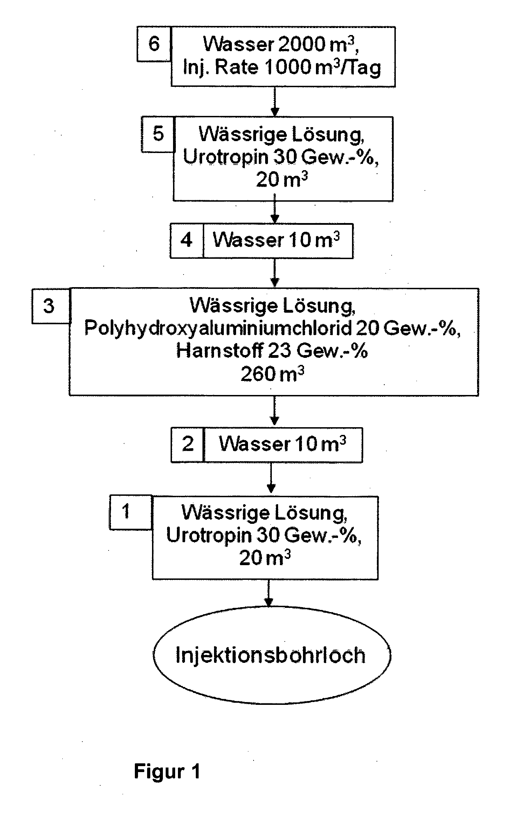

Beim zweiten Modellversuch betrug die Permeabilität des Materials 1,415 Darcy (1,415*10$^{-12}$ m$^2$). Es wurden die gleichen Mengen an $F_1$, $F_2$ und Wasserportionen mit gleichen Konzentrationen, wie oben beschrieben, injiziert. Die Ergebnisse des Versuchs sind analog zu Figur 2 in Figur 3 dargestellt. Durch das serielle Verpressen der Formulierungen $F_1$ und $F_2$ steigt der Druckgradient von 0,05 auf 10 bar/m bis 27 bar/m (10 bis 27*10$^5$ Pa/m), nachdem die Formulierungen $F_1$ und $F_2$ jeweils vollständig injiziert sind und sich im Kern vermischt haben. Damit sind die Ziele des "Conformance Control" erreicht.

**Patentansprüche**

1. Verfahren zur Förderung von Erdöl aus unterirdischen Erdöllagerstätten, in welche mindestens eine Injektionsbohrung und mindestens eine Produktionsbohrung abgeteuft sind, umfassend mindestens die folgenden Verfahrensschritte:

(1) Injizieren eines oder mehrerer Flutmedien in mindestens eine Injektionsbohrung und Entnahme von Erdöl durch mindestens eine Produktionsbohrung,

(2) Blockieren hoch permeabler Zonen der Erdöllagerstätte im Bereich zwischen der mindestens einen Injektionsbohrung und der mindestens einen Produktionsbohrung, indem mindestens eine wässrige Formulierungen F1 und mindestens eine wässrige Formulierungen F2 jeweils separat nacheinander durch die mindestens eine Injektionsbohrung in die Lagerstätte injiziert werden, wobei sich die Formulierungen nach dem Injizieren in der Formation in einer Vermischungszone miteinander vermischen und viskose Gele bilden,

(3) Fortsetzen des Injizierens eines oder mehrerer Flutmedien in die Injektionsbohrung,

**dadurch gekennzeichnet, dass**

die Formulierung F1 Wasser und Urotropin umfasst,

die Formulierung F2 Wasser und Harnstoff umfasst, und F1 und/oder F2 mindestens eine weitere Verbindung M ausgewählt aus Metallverbindungen und Halbmetallverbindungen umfassen, die beim Versetzen mit Basen Gele bilden kann wobei die Metallverbindungen und Halbmetallverbindungen aus Fe(II) und Fe(III)-Salzen, Vanadiumsalzen, Zirkoniumsalzen, Aluminium(III)salzen und kolloidalen Si-Verbindungen ausgewählt werden,

und dass nach Schritt (2) in der Vermischungszone der Formulierungen die Konzentration des Urotropins mindestens 1 Gew.-%, die Konzentration des Harnstoffs mindestens 5,75 Gew.-% und die Konzentration der mindestens einen Verbindung M mindestens 5 Gew.-% beträgt, bezogen auf die Summe aus Wasser, Urotropin, Harnstoff und der mindestens einen Verbindung M, die sich in der Vermischungszone befinden,

wobei die Temperatur an der Injektionsbohrung vor Verfahrensschritt (2) höchstens 60°C beträgt.

2. Verfahren gemäß Anspruch 1, **dadurch gekennzeichnet, dass** die Konzentration des Urotropins in der Formulierung F1 6 bis 32 Gew.-% beträgt, bezogen auf das Gesamtgewicht der Formulierung F1.

3. Verfahren gemäß einem der Ansprüche 1 bis 2, **dadurch gekennzeichnet, dass** die Konzentration des Harnstoffs in der Formulierung F2 16 bis 36 Gew.-% beträgt, bezogen auf das Gesamtgewicht der Formulierung F2.

4. Verfahren gemäß einem der Ansprüche 1 bis 3, **dadurch gekennzeichnet, dass** die Konzentration der mindestens einen weiteren Verbindung M in der Formulierung F1 beziehungsweise F2 4 bis 8 Gew.-% beträgt, jeweils bezogen auf das Gesamtgewicht der Formulierung F1 beziehungsweise F2 und bezogen auf die wasserfreie Verbindung.

5. Verfahren gemäß einem der Ansprüche 1 bis 4, **dadurch gekennzeichnet, dass** die mindestens eine weitere Verbindung M ausgewählt ist aus der Gruppe bestehend aus wasserlöslichen Aluminium(III)salzen und kolloidale Si-Verbindungen.

6. Verfahren gemäß Anspruch 5, **dadurch gekennzeichnet, dass** die wasserlöslichen Aluminium(III)salze ausgewählt sind aus Aluminiumnitrat, Aluminiumchlorid, Aluminiumsulfat, Aluminiumacetat, Aluminiumacetylacetonat, deren teilhydrolysierten Derivaten und Mischungen davon.

7. Verfahren gemäß Anspruch 5, **dadurch gekennzeichnet, dass** es sich bei den kolloidalen Si-Verbindungen um kolloidales $SiO_2$ handelt.

8. Verfahren gemäß einem der Ansprüche 1 bis 7, **dadurch gekennzeichnet, dass** in Schritt (2) insgesamt mindestens drei Portionen Formulierungen ausgewählt aus F1 und F2 abwechselnd injiziert werden, wobei die erste und die letzte injizierte Portion aus F1 ausgewählt ist.

9. Verfahren gemäß einem der Ansprüche 1 bis 8, **dadurch gekennzeichnet, dass** in Schritt (2) zwischen dem Injizieren der Formulierungen F1 und F2 und/oder dem Injizieren der Formulierungen F2 und F1 eine Portion Pufferwasser injiziert wird.

10. Verfahren gemäß einem der Ansprüche 1 bis 9 **dadurch gekennzeichnet, dass** die wässrigen Formulierungen F1 und F2, gegebenenfalls injiziertes Pufferwasser und das Wasser zum Nachfluten die gleiche Dichte aufweisen.

11. Verfahren gemäß Anspruch 10 **dadurch gekennzeichnet, dass** zum Ausgleich der Dichte der wässrigen Formulierungen F1 und F2, des gegebenenfalls injiziertes Pufferwasser und des Wasser zum Nachfluten Salze ausgewählt aus NaCl oder $CaCl_2$ oder salzhaltiges Formationswasser eingesetzt werden.

12. Verfahren gemäß einem der Ansprüche 1 bis 11, **dadurch gekennzeichnet, dass** Schritt (2) wiederholt wird, wenn bei der Erdölförderung in Schritt (3) die kritische Produktionsverwässerung erreicht wird.

13. Verfahren gemäß einem der Ansprüche 1 bis 12, **dadurch gekennzeichnet, dass** nach dem Nachfluten 1 bis 3 Tage lang kein Flutmedium in die mindestens eine Injektionsbohrung injiziert wird.

**Claims**

1. A process for producing mineral oil from underground mineral oil deposits into which at least one injection well and at least one production well have been sunk, comprising at least the following process steps:

   (1) injecting one or more flooding media into at least one injection well and withdrawing mineral oil through at least one production well,
   (2) blocking highly permeable zones in the mineral oil deposit in the region between the at least one injection well and the at least one production well, by injecting at least one aqueous formulation F1 and at least one aqueous formulation F2 each separately in succession through the at least one injection well into the deposit, the formulations mixing with one another in a mixing zone in the formation after injection to form viscous gels,
   (3) continuing the injection of one or more flooding media into the injection well,

   wherein
   formulation F1 comprises water and urotropin,
   formulation F2 comprises water and urea, and F1 and/or F2 comprise(s) at least one further compound M selected from metal compounds and semimetal compounds, which further compound can form gels when admixed with bases, the metal compounds and semimetal compounds being selected from Fe(II) and Fe(III) salts vanadium salts, zirconium salts, aluminium(III) salts and colloidal Si compounds,
   wherein the concentration of urotropin is at least 1% by weight, the concentration of urea at least 5.75% by weight and the concentration of the at least one compound M at least 5% by weight in the mixing zone of the formulations after step (2), based on the sum of water, urotropin, urea and the at least one compound M present in the mixing zone, the injection well temperature before process step (2) being not more than 60°C.

2. The process according to claim 1, wherein the concentration of urotropin in formulation F1 is 6 to 32% by weight, based on the total weight of formulation F1.

3. The process according to either of claims 1 and 2, wherein the concentration of urea in formulation F2 is 16 to 36% by weight, based on the total weight of formulation F2.

4. The process according to any of claims 1 to 3, wherein the concentration of the at least one further compound M in formulation F1 or F2 is 4 to 8% by weight, based in each case on the total weight of formulation F1 or F2 and based on the anhydrous compound.

5. The process according to any of claims 1 to 4, wherein the at least one further compound M is selected from the group consisting of water-soluble aluminum(III) salts and colloidal Si compounds.

6. The process according to claim 5, wherein the water-soluble aluminum(III) salts are selected from aluminum nitrate, aluminum chloride, aluminum sulfate, aluminum acetate, aluminum acetylacetonate, partly hydrolyzed derivatives thereof and mixtures thereof.

7. The process according to claim 5, wherein the colloidal Si compounds are colloidal $SiO_2$.

8. The process according to any of claims 1 to 7, wherein at least three portions in total of formulations selected from F1 and F2 are injected alternately in step (2), the first and last portion injected being selected from F1.

9. The process according to any of claims 1 to 8, wherein a portion of buffer water is injected in step (2) between the injection of formulations F1 and F2 and/or the injection of formulations F2 and F1.

10. The process according to any of claims 1 to 9, wherein the aqueous formulations F1 and F2, any buffer water injected and the water for subsequent flooding have the same density.

11. The process according to claim 10, wherein the densities of the aqueous formulations F1 and F2, of any buffer water injected and of the water for subsequent flooding are balanced out using salts selected from NaCl and $CaCl_2$ and salt-containing formation water.

12. The process according to any of claims 1 to 11, wherein step (2) is repeated when critical watering out of production is attained in the mineral oil production in step (3).

13. The process according to any of claims 1 to 12, wherein no flooding medium is injected into the at least one injection well for 1 to 3 days after the subsequent flooding.

**Revendications**

1. Procédé pour l'extraction de pétrole à partir de gisements pétrolifères souterrains, dans lesquels ont été forés au moins un puits d'injection et au moins un puits de production, comprenant au moins les étapes suivantes de processus :

   (1) injection d'un ou de plusieurs fluides d'injection dans au moins un puits d'injection et extraction de pétrole par au moins un puits de production,
   (2) blocage de zones hautement perméables du gisement pétrolifère dans la région comprise entre ledit au moins un puits d'injection et ledit au moins un puits de production, par injection dans le gisement d'au moins une composition aqueuse F1 et d'au moins une composition aqueuse F2 chacune séparément, successivement, par ledit au moins un puits d'injection, après l'injection dans la formation les compositions se mélangeant entre elles dans une zone de mélange et formant un gel,
   (3) poursuite de l'injection d'un ou de plusieurs fluides d'injection dans le puits d'injection,

   **caractérisé en ce que**
   la composition F1 comprend de l'eau et de l'urotropine, la composition F2 comprend de l'eau et de l'urée, et F1 et/ou F2 comprend/comprennent au moins un autre composé M choisi parmi des composés métalliques et des composés métalloïdiques, qui lors de l'addition de bases peut former des gels, les composés métalliques et les composés métalloïdiques étant choisis parmi des sels de Fe(II) et Fe(III), des sels de vanadium, des sels de zirconium, des sels d'aluminium(III) et des composés colloïdaux de Si,
   et **en ce que** dans la zone de mélange des compositions après l'étape (2) la concentration de l'urotropine vaut au moins 1 % en poids, la concentration de l'urée vaut au moins 5,75 % en poids et la concentration dudit au moins un composé M vaut au moins 5 % en poids, par rapport à la somme d'eau, urotropine, urée et dudit au moins un composé M, qui se trouvent dans la zone de mélange,
   la température au niveau du puits d'injection avant l'étape (2) du procédé étant au maximum de 60 °C.

2. Procédé selon la revendication 1, **caractérisé en ce que** la concentration de l'urotropine dans la composition F1 vaut de 6 à 32 % en poids, par rapport au poids total de la composition F1.

3. Procédé selon l'une quelconque des revendications 1 et 2, **caractérisé en ce que** la concentration de l'urée dans la composition F2 vaut de 16 à 36 % en poids, par rapport au poids total de la composition F2.

4. Procédé selon l'une quelconque des revendications 1 à 3, **caractérisé en ce que** la concentration dudit au moins un autre composé M dans la formulation F1 ou respectivement F2 vaut de 4 à 8 % en poids, respectivement par rapport au poids total de la composition F1 ou respectivement F2 et sur la base du composé anhydre.

5. Procédé selon l'une quelconque des revendications 1 à 4, **caractérisé en ce que** ledit au moins un autre composé M est choisi dans le groupe constitué par des sels d'aluminium(III) hydrosolubles et des composés de Si colloïdaux.

6. Procédé selon la revendication 5, **caractérisé en ce que** les sels d'aluminium(III) hydrosolubles sont choisis parmi le nitrate d'aluminium, le chlorure d'aluminium, le sulfate d'aluminium, l'acétate d'aluminium, l'acétylacétonate d'aluminium, leurs dérivés partiellement hydrolysés et des mélanges de ceux-ci.

7. Procédé selon la revendication 5, **caractérisé en ce que** pour ce qui est des composés de Si colloïdaux il s'agit de $SiO_2$ colloïdal.

**8.** Procédé selon l'une quelconque des revendications 1 à 7, **caractérisé en ce que** dans l'étape (2) au total au moins trois portions de compositions choisies parmi F1 et F2 sont injectées alternativement, les première et dernière portions injectées étant choisies parmi F1.

**9.** Procédé selon l'une quelconque des revendications 1 à 8, **caractérisé en ce que** dans l'étape (2) entre l'injection des compositions F1 et F2 et/ou l'injection des compositions F2 et F1 on injecte une portion d'eau tampon.

**10.** Procédé selon l'une quelconque des revendications 1 à 9, **caractérisé en ce que** les compositions aqueuses F1 et F2, éventuellement l'eau tampon injectée et l'eau destinée à la post-injection présentent la même densité.

**11.** Procédé selon la revendication 10, **caractérisé en ce que** pour égaliser la densité des compositions aqueuses F1 et F2, de l'eau tampon éventuellement injectée et de l'eau destinée à la post-injection on utilise des sels choisis parmi NaCl ou $CaCl_2$ ou de l'eau de la formation contenant des sels.

**12.** Procédé selon l'une quelconque des revendications 1 à 11, **caractérisé en ce qu'**on répète l'étape (2), lorsque lors de l'extraction du pétrole dans l'étape (3) on atteint la dilution critique de production.

**13.** Procédé selon l'une quelconque des revendications 1 à 12, **caractérisé en ce qu'**après la post-injection pendant 1 à 3 jours on n'injecte pas de fluide d'injection dans ledit au moins un puits d'injection.

**Figur 1**

Figur 2

Druckgradient, atm/m

Mobilität k/µ, mm²/(mPa.s)

Volumen (Porenvolumen)

Wasserinjektion

Druckgradient

Injektion Urotropinlösung

Mobilität

Injektion Aluminiumsalz + Harnstoff

Wasserinjektion

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- RU 2066743
- RU 2250367

- RU 2382174

**In der Beschreibung aufgeführte Nicht-Patentliteratur**

- **BORLING et al.** Pushing out the oil with Conformance Control. *Oilfield Review,* 1994, 44 ff